(19) Europäisches Patentamt
European Patent Office
Office européen des brevets

(11) EP 0 807 642 B1

(12) # EUROPÄISCHE PATENTSCHRIFT

(45) Veröffentlichungstag und Bekanntmachung des Hinweises auf die Patenterteilung:
**02.06.1999 Patentblatt 1999/22**

(51) Int Cl.⁶: **C08F 210/02**, C08L 23/08, C08F 4/32, C10L 1/18 // (C08F210/02, 218:04, 210:14)

(21) Anmeldenummer: **97107686.4**

(22) Anmeldetag: **10.05.1997**

(54) **Terpolymerisate des Ethylens, ihre Herstellung und ihre Verwendung als Additive für Mineralöldestillate**

Ethylene terpolymers, their preparation and their use as additives for mineral oil distillates

Terpolymères de l'éthylène, leur préparation et leur utilisation pour les distillats d'huile minérale

(84) Benannte Vertragsstaaten:
**AT DE ES FI FR GB GR IT NL SE**

(30) Priorität: **18.05.1996 DE 19620118**

(43) Veröffentlichungstag der Anmeldung:
**19.11.1997 Patentblatt 1997/47**

(73) Patentinhaber: **Clariant GmbH**
**65929 Frankfurt am Main (DE)**

(72) Erfinder:
- **Krull, Matthias, Dr.**
  **46147 Oberhausen (DE)**
- **Reimann, Werner, Dr.**
  **65929 Frankfurt (DE)**

(56) Entgegenhaltungen:
**EP-A- 0 099 646**
**EP-A- 0 184 048**
**EP-A- 0 203 554**
**EP-A- 0 463 518**
**EP-A- 0 493 769**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 807 642 B1

Printed by Jouve, 75001 PARIS (FR)

## Beschreibung

Die vorliegende Erfindung betrifft Terpolymerisate aus Ethylen, dem Vinylester einer oder mehrerer aliphatischer Monocarbonsäuren, die 2 bis 20 Kohlenstoffatome im Molekül enthalten, und 4-Methylpenten-1 mit einer bei 140°C gemessenen Schmelzviskosität von 20 bis 10.000 mPa.s. Sie werden mit Erfolg zur Verbesserung der Fließfähigkeit von Mineralölen und Mineralöldestillaten eingesetzt.

Rohöle und durch Destillation von Rohölen gewonnene Mitteldestillate wie Gasöl, Dieselöl oder Heizöl enthalten je nach Herkunft der Rohöle unterschiedliche Mengen langkettiger Paraffine (Wachse) gelöst. Bei niedrigen Temperaturen scheiden sich diese Paraffine als plättchenförmige Kristalle ab, teilweise unter Einschluß von Öl. Hierdurch wird die Fließfähigkeit der Rohöle und der aus ihnen gewonnenen Destillate erheblich beeinträchtigt. Es treten Feststoffablagerungen auf, die häufig zu Störungen bei Gewinnung, Transport und Einsatz der Mineralöle und Mineralölprodukte führen. So kommt es bei niedrigen Umgebungstemperaturen z.B. in der kalten Jahreszeit u.a. bei Dieselmotoren und Feuerungsanlagen zu Verstopfungen der Filter, die eine sichere Dosierung der Brennstoffe verhindern und schließlich in einer Unterbrechung der Kraftstoff- bzw. Heizmittelzufuhr resultieren. Auch das Fördern der Mineralöle und Mineralölprodukte durch Rohrleitungen über größere Entfernungen kann z.B. im Winter durch das Ausfallen von Paraffinkristallen beeinträchtigt werden.

Es ist bekannt, das unerwünschte Kristallwachstum durch geeignete Zusätze zu unterbinden und damit einem Anstieg der Viskosität der Öle entgegenzuwirken. Solche Zusätze, sie sind unter der Bezeichnung Stockpunkterniedriger bzw. Fließverbesserer bekannt, verändern Größe und Form der Wachskristalle und wirken damit einem Anstieg der Viskosität der Öle entgegen.

Das Fließ- und Kälteverhalten von Mineralölen und Mineralöldestillaten wird durch Angabe des Pour-Points (bestimmt nach ISO 3016) und des Cold-Filter-Plugging-Points (CFPP; bestimmt nach EN 116) beschrieben. Beide Kenngrößen werden in °C gemessen.

Typische Fließverbesserer für Rohöle und Mitteldestillate sind Copolymerisate des Ethylens mit Carbonsäureestern des Vinylalkohols. So setzt man nach der DE 11 47 799 B1 Erdöldestillat-Treib- bzw. -Brennstoffen mit einem Siedebereich zwischen etwa 120 und 400°C öllösliche Mischpolymerisate aus Ethylen und Vinylacetat mit einem Molekulargewicht zwischen etwa 1.000 und 3.000 zu. Bevorzugt werden Mischpolymerisate, die etwa 60 bis 99 Gew.-% Ethylen und etwa 1 bis 40 Gew.-% Vinylacetat enthalten. Sie sind besondes wirksam, wenn sie durch radikalische Polymerisation in einem inerten Lösungsmittel bei Temperaturen von etwa 70 bis 130°C und Drücken von 35 bis 2.100 atü hergestellt wurden (DE 19 14 756 B2).

Andere als Fließverbesserer eingesetze Polymerisate enthalten neben Ethylen und Vinylacetat z.B. Hexen-1 (vgl. EP 0 184 083 B1), Diisobutylen (vgl. EP 0 203 554 B1) oder ein Isoolefin der allgemeinen Formel

$$R-CH_2-\overset{\overset{\displaystyle CH_3}{|}}{C}=CHR'$$

wobei R und R' gleich oder verschieden sind und Wasserstoff oder $C_1$ - $C_4$-Alkylreste bedeuten (EP 0 099 646 A1). Terpolymerisate aus Ethylen, Vinylacetat und Neononansäurevinylester bzw. Neodecansäurevinylester als Additive für Mineralöldestillate sind Gegenstand der EP 0 493 769 B1. Auch Mischpolymerisate aus Ethylen, Alkencarbonsäureester und/oder Vinylester und Vinylketon werden als Stockpunkterniedriger und zur Verbesserung des Fließverhaltens von Rohölen und Mitteldestillaten der Rohöle verwendet (vgl. EP 0 111 883 B1).

Die Wirksamkeit der bekannten Zusatzstoffe zur Verbesserung der Eigenschaften von Mineralölfraktionen ist u.a. abhängig von der Herkunft des Mineralöls, aus dem sie gewonnen wurden und damit insbesondere von dessen Zusammensetzung. Additive, die zur Einstellung bestimmter Eigenschaftswerte von Fraktionen eines Rohöls hervorragend geeignet sind, können daher bei Destillaten von Rohölen anderen Ursprungs zu völlig unbefriedigenden Ergebnissen führen.

Inzwischen stehen Additive zur Verfügung, die einen breiten Anwendungsbereich haben, d.h die Fließeigenschaften von Mineralölen und Mineralölfraktionen unterschiedlicher Herkunft bei tiefen Temperaturen deutlich verbessern. Dennoch gibt es Fälle, in denen sie sich als wenig oder gar nicht brauchbar erweisen, sei es, daß sie nur wenig zur Erhöhung der Fließfähigkeit in der Kälte beitragen oder daß sie die Filtrierbarkeit von Mineralöldestillaten oberhalb des Cloud Points beeinträchtigen. Die Ursachen hierfür sind vielfältig; die Erschließung bisher nicht genutzter Rohstoffe, die geänderte Verarbeitung der Primärprodukte und neue Anforderungen des Marktes seien als Beispiele genannt. Überdies besitzen die bekannten Fließverbesserer einen hohen Eigenstockpunkt. Diese Eigenschaft hat zur Folge, daß sie bei niedrigen Umgebungstemperaturen in beheizten Tanken gelagert und/oder als hochverdünnte Lösungen angewandt werden müssen.

Es bestand daher die Aufgabe, neue Additive zur Verbesserung der Fließfähigkeit solcher Erdölarten oder Erdölfraktionen zu entwickeln, bei denen die Additive des Standes der Technik nur unbefriedigend wirken, die zudem eine ausreichende Filtrierbarkeit von Erdöldestillaten oberhalb des Cloud Points gewährleisten und auch bei niedrigen Umgebungstemperaturen problemlos zu handhaben sind.

Gegenstand der Erfindung sind Terpolymerisate aus Ethylen, dem Vinylester einer oder mehrerer aliphatischer, linearer oder verzweigter Monocarbonsäuren, die 2 bis 20 Kohlenstoffatome im Molekül enthalten, und 4-Methylpenten-1 mit einem Anteil von 10 bis 35 Gew.-% Vinylester und 0,5 bis 20 Gew.-% 4-Methylpenten-1 (jeweils bezogen auf das Terpolymerisat) mit einer bei 140°C gemessenen Schmelzviskosität von 20 bis 10.000 mPa.s.

Hinsichtlich der stofflichen Zusammensetzung der neuen Terpolymerisate ist zu beachten, daß die Vinylester aliphatischer Monocarbonsäuren erfindungsgemäß als eine Monomerenkomponente gelten, gleichgültig, ob Bestandteil der Terpolymerisate ein einziger oder mehrere Vinylester von $C_2$- bis $C_{20}$-Monocarbonsäuren ist.

Ein weiterer Gegenstand der Erfindung ist die Verwendung der vorstehend beschriebenen Terpolymerisate zur Verbesserung der Fließfähigkeit von Mineralölen und insbesondere Mineröldestillaten.

Überraschenderweise haben sich die Terpolymerisate der Erfindung hervorragend zur Verbesserung der Fließfähigkeit auch solcher Mineralöle und Mineralöldestillate bewährt, deren Fließverhalten mit den Additiven des Standes der Technik nur unzureichend beeinflußt werden konnte. Eine weitere wertvolle Eigenschaft der neuen Terpolymerisate ist ihr niedriger Eigenstockpunkt in organischen Lösemitteln. Er liegt deutlich unter dem Stockpunkt von Ethylen/Vinylester-Copolymeren. Daher können die neuen Terpolymerisate selbst bei niedrigen Außentemperaturen in unbeheizten Tanken gelagert und ohne vorheriges Erwärmen verwendet werden. Ferner ist ihre gegenüber vergleichbaren Copolymeren des Standes der Technik deutlich niedrigere Einmischtemperatur hervorzuheben, die zu einer verbesserten Filtrierbarkeit der mit ihnen versehenen Mitteldestillate oberhalb des Cloud-Points führt.

Grundsätzlich können die beanspruchten Terpolymerisate als Fließverbesserer sowohl in Rohölen als auch in den durch Destillation gewonnenen Weiterverarbeitungsprodukten der Rohöle eingesetzt werden. Bevorzugt ist jedoch ihre Verwendung in Mineralöldestillaten, insbesondere Mineralölmitteldestillaten. Hierunter werden Kohlenwasserstofffraktionen verstanden, die zwischen 150 und 400°C sieden. Beispiele für derartige Rohöldestillate sind Petroleum, leichte Heizöle und Dieselkraftstoff. Von besonderer Bedeutung sind Mitteldestillate wie Heizöl EL und Dieselkraftstoff.

Die neuen Terpolymerisate enthalten Methylgruppen, die einerseits auf die Struktur der Comonomerenmoleküle, insbesondere des 4-Methylpentens-1, und andererseits auf den Polymerisationsmechanismus des Ethylens zurückgehen. Bevorzugt weisen die Terpolymeriate 4 bis 15 $CH_3$-Gruppen je 100 $CH_2$-Gruppen auf, ausgenommen $CH_3$-Gruppen, die vom Vinylacetat als Vinylester herrühren. Die Bestimmung der Methylgruppen erfolgt durch $^1$H-NMR-Spektroskopie.

Für den Einsatz als Fließverbesserer besonders geeignet sind Terpolymerisate gemäß der Erfindung mit einer nach ISO 3219(B) bei 140°C gemessenen Schmelzviskosität von 50 bis 5000 mPa.s, vorzugsweise 30 bis 1.000 mPa.s und insbesondere 50 bis 500 mPa.s. Terpolymerisate höherer Schmelzviskosität setzt man bevorzugt Rohölen, solche niederer Schmelzviskosität, bevorzugt Mitteldestillaten, zu.

Zur Herstellung der erfindungsgemäßen Terpolymerisate aus Ethylen, dem Vinylester einer aliphatischen linearen oder verzweigten Monocarbonsäure, die 2 bis 20 Kohlenstoffatome im Molekül enthält, und 4-Methylpenten-1 geht man von Gemischen der Monomeren aus. 4-Methylpenten-1 ist ein Handelsprodukt. Das Olefin wird technisch z.B. durch Dimerisierung von Propylen erhalten (vgl. Ullmann's Encyclopedia of Industrial Chemistry, 5. Ed., Vol. A21, p. 567). Die Vinylester der aliphatischen Monocarbonsäuren sind ebenfalls Handelsprodukte. Ein gebräuchlicher Weg zu ihrer Herstellung ist die Umsetzung von Carbonsäuren mit Acetylen (vgl. Ullmanns Encyclopädie der Technischen Chemie, 4. Auflage, Bd. 23, S. 598 ff). Die Säurekomponente der Ester kann linear oder verzweigtkettig sein. Bevorzugt werden die Vinylester der Essigsäure, der Propionsäure, der isomeren Buttersäuren, der Laurinsäure, der Neononansäure und der Neodecansäure, vorzugsweise Essigsäurevinylester (Vinylacetat).

Die Copolymerisation der Ausgangsstoffe erfolgt nach bekannten Verfahren (vgl. hierzu z.B. Ullmanns Encyclopädie der Technischen Chemie, 4. Auflage, Bd. 19, Seiten 169 bis 178). Geeignet sind die Polymerisation in Lösung, in Suspension in der Gasphase und die Hochdruckmassenpolymerisation. Vorzugsweise wendet man die Hochdruckmassepolymerisation an, die bei Drücken von 50 bis 400 MPa, vorzugsweise 100 bis 300 MPa und Temperaturen von 50 bis 350°C, vorzugsweise 100 bis 300°C, durchgeführt wird. Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxidicarbonat, t-Butylperpivalat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Monomerengemisch, eingesetzt.

Die gewünschte Schmelzviskosität der Terpolymerisate wird bei gegebener Zusammensetzung des Monomerengemisches durch Variation der Reaktionsparameter Druck und Temperatur und gegebenenfalls durch Zusatz

von Moderatoren eingestellt. Als Moderatoren haben sich Wasserstoff, gesättigte oder ungesättigte Kohlenwasserstoffe, z.B. Propan, Aldehyde, z.B. Propionaldehyd, n-Butyraldehyd oder Isobutyraldehyd, Ketone, z.B. Aceton, Methylethylketon, Methylisobutylketon, Cyclohexanon oder Alkohole, z.B. Butanol, bewährt. In Abhängigkeit von der angestrebten Viskosität werden die Moderatoren in Mengen bis zu 20 Gew.-%, vorzugsweise 0,05 bis 10 Gew.-%, bezogen auf das Monomerengemisch, angewandt.

Um Polymerisate der beanspruchten Zusammensetzung zu erhalten, setzt man Monomerengemische ein, die außer Ethylen und gegebenenfalls einem Moderator 5 bis 40 Gew.-%, vorzugsweise 10 bis 40 Gew.-% Vinylester und 1 bis 40 Gew.-% 4-Methylpenten-1 enthalten.

Mit der von der Zusammensetzung des Terpolymerisats abweichenden Zusammensetzung des Monomerengemischs trägt man der unterschiedlichen Polymerisationsgeschwindigkeit der Monomeren Rechnung. Die Polymerisate fallen als farblose Schmelzen an, die bei Raumtemperatur zu wachsartigen Feststoffen erstarren.

Die Hochdruckmassepolymerisation wird in bekannten Hochdruckreaktoren, z.B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwassergemische, Benzol oder Toluol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Monomeren, dem Initiator und, sofern eingesetzt, dem Moderator, einem Rohrreaktor über den Reaktoreingang sowie über einen oder mehrere Seitenäste zugeführt. Hierbei können die Monomerenströme unterschiedlich zusammengesetzt sein (EP 0 271 738 B1).

Die erfindungsgemäßen Terpolymerisate werden Mineralölen oder Mineralöldestillaten in Form von Lösungen oder Dispersionen zugesetzt. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphta, ®Shellsol AB, ®solvesso 150, ®Solvesso 200, ®Solvesso 250, ®Exxsol, ®ISOPAR- und Shellsol D-Typen. Durch die neuen polymeren Verbindungen in ihren rheologischen Eigenschaften verbesserte Mineralöle oder Mineralöldestillate enthalten 0,001 bis 2, vorzugsweise 0,005 bis 0,5 Gew.-% Terpolymerisat, bezogen auf das Destillat.

Die erfindungsgemäßen Terpolymerisate können als Fließverbesserer weiterhin in Form von Mischungen eingesetzt werden, die aus Polymeren der beanspruchten Art, jedoch unterschiedlicher qualitativer und/oder quantitativer Zusammensetzung und/oder unterschiedlicher (bei 140°C gemessener) Viskosität bestehen. Derartige Gemische enthalten z.B. Polymerisate mit gleichem Vinylester-, jedoch verschiedenem Ethylen-/4-Methylpenten-1-Anteil. Das Mischungsverhältnis (in Gewichtsteilen) der beiden Komponenten kann über einen weiten Bereich variiert werden und z.B. 20 : 1 bis 1 : 20, vorzugsweise 10 : 1 bis 1 : 10 betragen. Auf diesem Wege lassen sich gezielt Fließverbesserer individuellen Anforderungen anpassen.

Mit dem gleichen Ergebnis, die Wirksamkeit als Fließverbesserer für bestimmte Substrate zu optimieren, können die erfindungsgemäßen Polymerisate auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind Vinylacetat enthaltende Copolymerisate oder Terpolymerisate des Ethylens, polare Verbindungen, die eine Paraffindispergierung bewirken (Paraffindispergaratoren), sowie Kammpolymere.

So haben sich Mischungen der neuen Terpoylmerisate mit Copolymerisaten hervorragend bewährt, die 10 bis 40 Gew.-% Vinylacetat und 60 bis 90 Gew.-% Ethylen enthalten. Nach einer weiteren Ausgestaltung der Erfindung setzt man die beanspruchten Terpolymerisate in Mischung mit Ethylen/Vinylacetat/Neononansäurevinylester-Terpolymerisaten oder Ethylen-Vinylacetat/Neodecansäurevinylester-Terpolymerisaten zur Verbesserung der Fließfähigkeit von Mineralölen oder Mineralöldestillaten ein. Die Terpolymerisate der Neononansäurevinylester bzw. der Neodecansäurevinylester enthalten außer Ethylen 10 bis 35 Gew.-% Vinylacetat und 1 bis 25 Gew.-% der jeweiligen Neoverbindung. Das Mischungsverhältnis der erfindungsgemäßen Terpoylmerisate mit den vorstehend beschriebenen Ethylen/Vinylacetat-Copolymerisaten bzw. den Terpolymerisaten aus Ethylen, Vinylacetat und den Vinylestern der Neononan- bzw. der Neodecansäure beträgt (in Gewichtsteilen) 20 : 1 bis 1 : 20, vorzugsweise 10 : 1 bis 1 : 10.

Zur Verwendung als Fließverbesserer können die neuen Terpolymerisate ferner in Mischung mit Paraffindispergatoren eingesetzt werden. Diese Additive reduzieren die Größe der Paraffinkristalle und bewirken, daß die Paraffinpartikel sich nicht absetzen, sondern kolloidal mit deutlich reduziertem Sedimentationsbestreben, dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4.211.534). Andere Paraffindispergatoren sind Copolymere des Maleinsäureanhydrids und $\alpha,\beta$-ungesättigten Verbindungen, die gegebenenfalls mit primären Monoalkylaminen und/oder aliphatischen Alkoholen umgesetzt werden können (vgl. EP 0 154 177), die Umsetzungsprodukte von Alkenyl-spirobislactonen mit Aminen (vgl. EP 0 413 279 B1) und nach EP 0 606 055 A2 Umsetzungsprodukte von Terpolymeren auf Basis $\alpha,\beta$-ungesättigter Dicarbonsäureanhydride, $\alpha,\beta$-ungesättigter Verbindungen und Polyoxyalkylenether niederer ungesättigter Alkohole.

Schließlich werden in einer weiteren bewährten Variante der Erfindung die neuen Terpolymerisate zusammen mit Kammpolymeren als Fließverbesserer verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers - Structure and Properties; N.A. Platé and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 Al), Copolymere aus einem $C_6$- bis $C_{24}$- α-Olefin und einem N-$C_6$- bis $C_{22}$-Alkylmaleinsäureimid (vgl. EP 0 320 766), ferner veresterte Olefin/Maleinsäureanhydrid-Copolymere, Polymere und Copolymere von α-Olefinen und veresterte Copolymere von Styrol und Maleinsäureanhydrid.

Das Mischungsverhältnis (in Gewichtsteilen) der erfindungsgemäßen Terpolymerisate mit Paraffindispergatoren bzw. Kammpolymeren beträgt jeweils 1 : 10 bis 20 : 1, vorzugsweise 1 : 1 bis 10 : 1.

Die neuen Terpolymerisate und ihre Mischungen untereinander sowie mit Co-Additiven können allein oder auch zusammen mit anderen Zusatzstoffen verwendet werden, beispielsweise mit Entwachsungshilfsmitteln, Korrosionsinhibitoren, Antioxidantien, Lubricity-Additiven oder Schlamminhibitoren.

Durch die nachfolgenden Beispiele wird die Erfindung näher erläutert, jedoch nicht auf die beschriebenen Ausführungsformen beschränkt.

**Beispiele**

**Herstellung von Ethylen/Carbonsäurevinylester/4-Methylpenten-1-Terpolymerisaten**

Ethylen, Vinylacaetat (Vina) und 4-Methylpenten-1 (4-MP) werden unter Zusatz von Propionaldehyd als Molekulargewichtsregler (Moderator), in einem kontinuierlich betriebenen Hochdruckautoklaven polymerisiert. Hierzu wird das Monomerengemisch, dem als Initiator Bis(2-ethylhexyl)-peroxidicarbonat gelöst in Testbenzin (15 Gew.-%ige Lösung) zugesetzt worden ist, bei der in Tabelle 1a angegebenen Temperatur sowie dem ebenfalls in Tabelle 1a aufgeführten Reaktionsdruck in den Reaktor eingespeist. Die Verweilzeit der Reaktanten im Autoklaven beträgt etwa 120 Sekunden. In Tabelle 1a sind Einsatzstoffe und Ausbeute der Beispiele 1-11, in Tabelle 1b die Eigenschaften der erhaltenen Terpolymerisate zusammengestellt.

Der Vinylacetatgehalt wird durch Pyrolyse des Polymerisats bestimmt. Hierzu werden 100 mg des Polymerisats mit 200 mg reinem Polyethylen in einem Pyrolysekolben 5 Minuten bei 450°C in einem geschlossenen System unter Vakuum thermisch gespalten und die Spaltgase in einem 250 ml-Rundkolben aufgefangen. Das Spaltprodukt Essigsäure wird mit einer NaJ/$KJO_3$-Lösung umgesetzt und mit $Na_2S_2O_3$-Lösung das freiwerdende Jod titriert.

Die Bestimmung des Gehalts an 4-Methylpenten-1 sowie der Methylgruppen in den Polymerisaten erfolgt durch $^1$H-NMR-Spektroskopie (Messungen in $C_2D_2Cl_4$ bei 333 K; Spektrometer AM 360, Fa. Bruker).

Die Viskosität wird gemäß ISO 3219 (B) mit einem Rotationsviskosimeter (Haake RV 20) mit Platte-Kegel-Meßsystem bei 140 C gemessen ($V_{140}$).

Tabelle 1a:

| Beispiel Nr. | Temperatur (°C) | Druck (MPa) | Einsatz (Gew.-%) | | | Initiator (Gew.-ppm bez. auf Ethylen) | Moderator (Gew.-% bez. auf Monomere) | Ausbeute (%) |
|---|---|---|---|---|---|---|---|---|
| | | | $C_2H_4$ (%) | Vina (%) | 4-MP (%) | | | |
| 1 | 160 | 150 | 62 | 30 | 8 | 1.300 | 3,1 | 9,9 |
| 2 | 160 | 150 | 54 | 30 | 16 | 3.750 | 2,4 | 11,4 |
| 3 | 160 | 150 | 50,5 | 31 | 18,5 | 5.250 | 2,3 | 11,3 |
| 4 | 160 | 150 | 48 | 30 | 22 | 6.750 | 2,0 | 11,6 |
| 5 | 160 | 150 | 57 | 27 | 16 | 3.300 | 3,0 | 10,0 |
| 6 | 160 | 150 | 53 | 27 | 20 | 5.100 | 2,3 | 10,4 |
| 7 | 160 | 150 | 55 | 29 | 16 | 2.950 | 2,9 | 9,2 |

Tabelle 1a: (fortgesetzt)

| Beispiel Nr. | Temperatur (°C) | Druck (MPa) | Einsatz (Gew.-%) | | | Initiator (Gew.-ppm bez. auf Ethylen) | Moderator (Gew.-% bez. auf Monomere) | Ausbeute (%) |
|---|---|---|---|---|---|---|---|---|
| | | | $C_2H_4$ (%) | Vina (%) | 4-MP (%) | | | |
| 8 | 160 | 200 | 55 | 29 | 16 | 1.600 | 3,2 | 8,0 |
| 9 | 160 | 200 | 55 | 31 | 14 | 1.300 | 3,0 | 8,7 |
| 10 | 160 | 200 | 66 | 26 | 8 | 650 | 2,5 | 8,1 |
| 11 | 220 | 200 | 55 | 29 | 16 | 860 | 2,3 | 17,2 |

Tabelle 1b:

| Beispiel Nr. | Vinylacetatgehalt (Gew.-%) | $V_{140}$ (mPa*s) | $CH_3$/100 $CH_2$ |
|---|---|---|---|
| 1 | 28,5 | 147 | 4,5 |
| 2 | 27,5 | 154 | 7,1 |
| 3 | 28,8 | 132 | 8,0 |
| 4 | 28,3 | 109 | 9,1 |
| 5 | 25,3 | 88 | 7,4 |
| 6 | 24,3 | 108 | 8,5 |
| 7 | 26,8 | 111 | 7,4 |
| 8 | 26,2 | 113 | 6,6 |
| 9 | 29,7 | 125 | 6,3 |
| 10 | 22,6 | 284 | 4,2 |
| 11 | 26,4 | 122 | 7,4 |

Die Eigenschaften (Handhabbarkeit, Wirksamkeit, Löslichkeit) der neuen Terpolymerisate werden mit den entsprechenden Eigenschaften eines handelsüblichen Ethylen-Vinylacetat-Copolymers (E-VA) mit 28 Gew.-% Vinylacetat-Gehalt und einer Schmelzviskosität $V_{140}$ von 290 mPa.s und eines ebenfalls handelsüblichen Ethylen-Vinylacetat-Diisobutylen-Terpolymerisats (E-VA-DIB) mit 28 Gew.-% Vinylacetat-Gehalt, einer Schmelzviskosität $V_{140}$ von 275 mPa.s und einem Gehalt von 8 $CH_3$-Gruppen je 100 $CH_2$-Gruppen des Polyethylens verglichen.

**Handhabbarkeit der Terpolymerisate**

Als Maßstab für die Handhabbarkeit der erfindungsgemäßen Polymerisate dient ihr Pour Point, gemessen nach ISO 3016 an 50 Gew.-%igen Dispersionen in Kerosin (Kero) bzw. 20 Gew.-%igen Lösungen in Solvent Naphtha (SN). Die Ergebnisse der Untersuchungen sind in Tabelle 2 enthalten.

Tabelle 2

| | **20 % in SN** | **50 % in Kero** |
|---|---|---|
| Beispiel 2 | -21 °C | -3 °C |
| Beispiel 3 | -24 °C | -9 °C |
| Beispiel 4 | -36 °C | -15 °C |
| Beispiel 5 | -21 °C | -3 °C |

Tabelle 2 (fortgesetzt)

| | 20 % in SN | 50 % in Kero |
|---|---|---|
| Beispiel 6 | -27 °C | 0 °C |
| Beispiel 7 | -21 °C | -6 °C |
| Beispiel 8 | -21 °C | -3 °C |
| Beispiel 9 | -21 °C | -3 °C |
| Beispiel 11 | -30 °C | -9 °C |
| E-VA | -9 °C | +18 °C |
| E-VA-DIB I | -15 °C | + 6 °C |

**Charakterisierung der Testöle**

Das Verhalten der neuen Terpolymerisate als Kaltfließverbesserer für Mineralöle wird an den Testölen 1 und 3 geprüft, deren thermische Eigenschaften in Tabelle 3 zusammengefaßt sind.

Tabelle 3

| | Testöl 1 | Testöl 2 | Testöl 3 | Testöl 4 |
|---|---|---|---|---|
| Siedebeginn | 187 °C | 185 °C | 184 °C | 165 °C |
| 30 % | 248 °C | 261 °C | 271 °C | 256 °C |
| 90% | 330 °C | 359 °C | 329 °C | 354 °C |
| Siedeende | 358 °C | 380 °C | 353 °C | 370 °C |
| Cloud Point | -7 °C | 2,9 °C | -5 °C | 0 °C |
| CFPP | -12 °C | 0 °C | -9 °C | -3 °C |

**Wirksamkeit der Terpolymerisate**

In Tabelle 4 wird die Wirksamkeit der nach den Beispielen 1 bis 11 hergestellten Ethylen/Vinylacetat/4-Methylpenten-1-Terpolymerisate als Additive für Mineralöle und Mineralöldestillate an Hand des CFPP-Tests (Cold Filter Plugging Test nach EN 116) beschrieben. Die Additive werden entweder als 50 %ige Suspensionen in Kerosin oder als 20 Gew.-%ige Lösungen in Solvent Naphtha eingesetzt:

Tabelle 4

| Beispiel | Testöl 1 (+ 20 %iges Additiv) | | | Testöl 2 (+50 %iges Additiv) | | | Testöl 3 (+50%iges Additiv) | | |
|---|---|---|---|---|---|---|---|---|---|
| | 300 ppm | 500 ppm | 1000 ppm | 100 ppm | 200 ppm | 400 ppm | 100 ppm | 200 ppm | 400 ppm |
| 1 | -20 | -20 | -24 | -11 | -15 | -14 | | | |
| 2 | -18 | -20 | -25 | | | | | | |
| 3 | -19 | -20 | -26 | | | | | | |
| 4 | -18 | -19 | -24 | | | | | | |
| 5 | -19 | -20 | -25 | -5 | -11 | -14 | | | |
| 6 | -18 | -18 | -24 | -2 | -10 | -11 | | | |
| 7 | -18 | -24 | -28 | | | | -4 | -14 | -18 |
| 8 | | | | | | | -6 | -16 | -19 |
| 9 | -18 | -21 | -25 | | | | -9 | -15 | -18 |
| 11 | | | | | | | -2 | -12 | -16 |

Tabelle 4 (fortgesetzt)

| Beispiel | Testöl 1 (+ 20 %iges Additiv) | | | Testöl 2 (+50 %iges Additiv) | | | Testöl 3 (+50%iges Additiv) | | |
|---|---|---|---|---|---|---|---|---|---|
| | 300 ppm | 500 ppm | 1000 ppm | 100 ppm | 200 ppm | 400 ppm | 100 ppm | 200 ppm | 400 ppm |
| E-VA-Copolymer | -19 | -20 | -20 | -9 | -11 | -14 | -2 | -12 | -15 |
| E-VA-DIB Terpolymer | -18 | -19 | -18 | -2 | -11 | -16 | -4 | -9 | -12 |

**Löslichkeit der Terpolymerisate**

Das Löslichkeitsverhalten der Terpolymerisate wird entsprechend dem British-Rail Test wie folgt bestimmt: 400 ppm einer auf 22°C temperierten Dispersion des Polymerisats in Kerosin (50 Gew.-% Polymerisat, bezogen auf die Dispersion) werden zu 200 ml des auf 22°C temperierten Testöls 3 (s. Tabelle 3) dosiert und 30 Sekunden kräftig geschüttelt. Nach 24 Stunden Lagerung bei +3°C wird erneut 15 Sekunden geschüttelt und anschließend bei 3°C in drei Portionen von je 50 ml über einen 1,6 µm-Glasfibermicrofilter (Ø 25 mm; Whatman GFA, Best.-Nr. 1820025) filtriert. Aus den drei Filtrationszeiten $T_1$, $T_2$, und $T_3$ wird der ADT-Wert wie folgt berechnet:

$$ADT=\frac{(T_3-T_1)}{T_2}\bullet 50$$

Ein ADT-Wert ≤ 15 wird als Anhaltspunkt dafür angesehen, daß das Gasöl in "normal" kalter Witterung zufriedenstellend verwendbar ist. Produkte mit ADT-Werten > 25 werden als nicht filtrierbar bezeichnet.

Tabelle 5

| | **ADT** |
|---|---|
| Blindwert (ohne Additiv) | 3,0 |
| Beispiel 2 | 6,2 |
| Beispiel 3 | 5,6 |
| Beispiel 4 | 4,1 |
| Beispiel 5 | 14,8 |
| Beispiel 6 | 4,5 |
| Beispiel 7 | 10,8 |
| Beispiel 8 | 13,7 |
| Beispiel 9 | 7,4 |
| Beispiel 11 | 4,7 |
| E-VA | > 25 |
| E-VA-DIB | > 25 |

**Patentansprüche**

1. Terpolymerisate aus Ethylen, dem Vinylester einer oder mehrerer aliphatischer, linearer oder verzweigtkettiger Monocarbonsäuren, die 2 bis 20 Kohlenstoffatome im Molekül enthalten, und 4-Methylpenten-1 mit einem Anteil von 10 bis 35 Gew.-% Vinylester und 0,5 bis 20 Gew.-% 4-Methylpenten-1 (jeweils bezogen auf das Terpolymerisat) und einer bei 140°C gemessenen Schmelzviskosität von 20 bis 10.000 mPa.s.

2. Terpolymerisate nach Anspruch 1, gekennzeichnet durch einen Gehalt von 4 bis 15 $CH_3$-Gruppen je 100 $CH_2$-Gruppen, ausgenommen $CH_3$-Gruppen, die von Vinylacetat (als Vinylester) herrühren.

3. Verfahren zur Herstellung von Terpolymerisaten nach Anspruch 1 oder 2, dadurch gekennzeichnet, daß man Monomerengemische, die außer Ethylen 5 bis 40 Gew.-% des Vinylesters einer oder mehrerer aliphatischer Monocarbonsäuren, die 2 bis 20 Kohlenstoffatome im Molekül aufweisen, und 1 bis 40 Gew.-% 4-Methylpenten-1 (jeweils bezogen auf das Monomerengemisch) und gegebenenfalls einen Moderator enthalten, bei Drücken von 50 bis 400 MPa, vorzugsweise 100 bis 300 MPa und Temperaturen von 50 bis 350°C, vorzugsweise 100 bis 300°C, in Gegenwart eines Radikalkettenstarters polymerisiert.

4. Verfahren nach Anspruch 3, dadurch gekennzeichnet, daß der Moderator ein aliphatischer Aldehyd oder ein aliphatisches Keton ist.

5. Verfahren nach Anspruch 3, dadurch gekennzeichnet, daß der Moderator Propionaldehyd oder Methylethylketon ist.

6. Verfahren nach einem oder mehreren der Ansprüche 3 bis 5, dadurch gekennzeichnet, daß man den Moderator in einer Menge von 0,05 bis 10 Gew.-%, bezogen auf das Monomerengemisch, anwendet.

7. Verfahren nach einem oder mehreren der Ansprüche 3 bis 5, dadurch gekennzeichnet, daß die Polymerisation in Gegenwart von 0,01 bis 20 Gew.-%, vorzugsweise 0,05 bis 10 Gew.-%, bezogen auf das Monomerengemisch eines Radikalkettenstartes, erfolgt.

8. Mischungen enthaltend Terpolymerisate nach Anspruch 1 oder 2 und Ethylen/Vinylacetat-Copolymerisate im Gewichtsverhältnis 20 : 1 bis 1 : 20, vorzugsweise 10 : 1 bis 1 : 10.

9. Mischungen nach Anspruch 8, dadurch gekennzeichnet, daß die Ethylen/Vinylacetat-Copolymerisate 60 bis 90 Gew.-% Ethylen und 10 bis 40 Gew.-% Vinylacetat enthalten.

10. Mischungen enthaltend Terpolymerisate nach Anspruch 1 oder 2 und Ethylen/Vinylacetat/Neononansäurevinylester-Terpolymerisate oder Ethylen/Vinylacetat/Neodecansäurevinylester im Verhältnis (in Gewichtsteilen) 20 : 1 bis 1 : 20, vorzugsweise 10 : 1 bis 1 : 10.

11. Mischungen nach Anspruch 10, dadurch gekennzeichnet, daß die Ethylen/Vinylacetat/Neononansäurevinylester-Terpolymerisate bzw. die Ethylen/Vinylacetat/Neodecansäurevinylester-Terpolymerisate außer Ethylen 10 bis 35 Gew.-% Vinylacetat und 1 bis 25 Gew.-% Neononansäurevinylester bzw. Neodencansäurevinylester enthalten.

12. Mischungen enthaltend Terpolymerisate nach Anspruch 1 oder 2 und Paraffindispergatoren im Verhältnis (in Gewichtsteilen) 1 : 10 bis 20 : 1, vorzugsweise 1 : 1 bis 10 : 1.

13. Mischungen enthaltend Terpolymerisate nach Anspruch 1 oder 2 und Kammpolymere im Verhältnis (in Gewichtsteilen) 1 : 10 bis 20 : 1, vorzugsweise 1 : 1 bis 10 : 1.

14. Mineralöle oder Mineralöldestillate, die 0,0005 bis 1 Gew.-%, vorzugsweise 0,001 bis 0,5 Gew.-% (bezogen auf das Mineralöldestillat) eines Terpolymerisats nach Anspruch 1 oder 2 oder Mischungen nach einem der Ansprüche 8 bis 13 enthalten.

## Claims

1. A terpolymer of ethylene, the vinyl ester of one or more aliphatic, linear or branched monocarboxylic acids containing from 2 to 20 carbon atoms in the molecule and 4-methylpent-1-ene, having a proportion of from 10 to 35% by weight of vinyl ester and from 0.5 to 20% by weight of 4-methylpent-1-ene (in each case based on the terpolymer) and a melt viscosity measured at 140°C of from 20 to 10,000 mPa.s.

2. A terpolymer as claimed in claim 1 containing from 4 to 15 $CH_3$ groups per 100 $CH_2$ groups, excluding $CH_3$ groups which originate from vinyl acetate (as vinyl ester).

3. A process for preparing terpolymers as claimed in claim 1 or 2, which comprises polymerizing monomer mixtures comprising, apart from ethylene, from 5 to 40% by weight of the vinyl ester of one or more aliphatic monocarboxylic acids containing from 2 to 20 carbon atoms in the molecule and from 1 to 40% by weight of 4-methylpent-1-ene

(in each case based on the monomer mixture) and if desired a moderator, at pressures of from 50 to 400 MPa, preferably from 100 to 300 MPa and temperatures of from 50 to 350°C, preferably from 100 to 300°C, in the presence of a free-radical chain initiator.

**4.** The process as claimed in claim 3, wherein the moderator is an aliphatic aldehyde or an aliphatic ketone.

**5.** The process as claimed in claim 3, wherein the moderator is propionaldehyde or methyl ethyl ketone.

**6.** The process as claimed in one or more of claims 3 to 5, wherein the moderator is employed in an amount of from 0.05 to 10% by weight, based on the monomer mixture.

**7.** The process as claimed in one or more of claims 3 to 5, wherein the polymerization is carried out in the presence of from 0.01 to 20% by weight, preferably from 0.05 to 10% by weight, based on the monomer mixture, of a free-radical chain initiator.

**8.** A mixture comprising terpolymers as claimed in claim 1 or 2 and ethylene-vinyl acetate copolymers in a weight ratio of from 20:1 to 1:20, preferably from 10:1 to 1:10.

**9.** A mixture as claimed in claim 8, wherein the ethylene-vinyl acetate copolymers comprise from 60 to 90% by weight of ethylene and from 10 to 40% by weight of vinyl acetate.

**10.** A mixture comprising terpolymers as claimed in claim 1 or 2 and ethylene-vinyl acetate-vinyl neononanoate terpolymers or ethylene-vinyl acetate-vinyl neodecanoate in a ratio (of parts by weight) of from 20:1 to 1:20, preferably from 10:1 to 1:10.

**11.** A mixture as claimed in claim 10, wherein the ethylene-vinyl acetate-vinyl neononanoate terpolymers or the ethylene-vinyl acetate-vinyl neodecanoate terpolymers comprise, apart from ethylene, from 10 to 35% by weight of vinyl acetate and from 1 to 25% by weight of vinyl neononanoate or vinyl neodecanoate.

**12.** A mixture comprising terpolymers as claimed in claim 1 or 2 and paraffin dispersants in a ratio (of parts by weight) of from 1:10 to 20:1, preferably from 1:1 to 10:1.

**13.** A mixture comprising terpolymers as claimed in claim 1 or 2 and comb-like polymers in a ratio (of parts by weight) of from 1:10 to 20:1, preferably from 1:1 to 10:1.

**14.** A mineral oil or mineral oil distillate containing from 0.0005 to 1% by weight, preferably from 0.001 to 0.5% by weight (based on the mineral oil distillate) of a terpolymer as claimed in claim 1 or 2 or a mixture as claimed in any of claims 8 to 13.

## Revendications

**1.** Terpolymères de l'éthylène, de l'ester vinylique d'un ou de plusieurs acides monocarboxyliques linéaires ou ramifiés, aliphatiques qui contiennent 2 à 20 atomes de carbone dans la molécule, et du 4-méthylpentène-1, avec une proportion de 10 à 35 % en poids d'ester vinylique et de 0,5 à 20 % en poids de 4-méthylpentène-1 (à chaque fois par rapport au terpolymère) et une viscosité à la fusion, mesurée à 140°C, de 20 à 10 000 mPa.s.

**2.** Terpolymères selon la revendication 1, caractérisés par une teneur de 4 à 15 groupes $CH_3$ pour 100 groupes $CH_2$, à l'exception des groupes $CH_3$ qui proviennent de l'acétate de vinyle (en tant qu'ester vinylique).

**3.** Procédé pour la préparation de terpolymères selon la revendication 1 ou 2, caractérisé en ce que l'on polymérise des mélanges de monomères qui contiennent, outre de l'éthylène, 5 à 40 % en poids de l'ester vinylique d'un ou de plusieurs acides monocarboxyliques aliphatiques qui présentent 2 à 20 atomes de carbone dans la molécule, et 1 à 40 % en poids de 4-méthylpentène-1 (à chaque fois par rapport au mélange de monomères) et éventuellement un modérateur, à des pressions de 50 à 400 MPa, de préférence de 100 à 300 MPa et des températures de 50 à 350°C, de préférence de 100 à 300°C, en présence d'un amorceur de chaînes radicalaires.

**4.** Procédé selon la revendication 3, caractérisé en ce que le modérateur est un aldéhyde aliphatique ou une cétone

aliphatique.

**5.** Procédé selon la revendication 3, caractérisé en ce que le modérateur est l'aldéhyde propionique ou la méthyléthylcétone.

**6.** Procédé selon l'une ou plusieurs des revendications 3 à 5, caractérisé en ce que l'on utilise le modérateur en une quantité de 0,05 à 10 % en poids, par rapport au mélange de monomères.

**7.** Procédé selon l'une ou plusieurs des revendications 3 à 5, caractérisé en ce que la polymérisation a lieu en présence de 0,01 à 20 % en poids, de préférence 0,05 à 10 % en poids, par rapport au mélange de polymères, d'un amorceur de chaînes radicalaires.

**8.** Mélanges contenant des terpolymères selon la revendication 1 ou 2 et des copolymères éthylène/acétate de vinyle dans la proportion en poids de 20:1 à 1:20, de préférence de 10:1 à 1:10.

**9.** Mélanges selon la revendication 8, caractérisés en ce que les copolymères éthylène/acétate de vinyle contiennent 60 à 90 % en poids d'éthylène et 10 à 40% en poids d'acétate de vinyle.

**10.** Mélanges contenant des terpolymères selon la revendication 1 ou 2 et des terpolymères éthylène/acétate de vinyle/néononanoate de vinyle ou éthylène/acétate de vinyle/néodécanoate de vinyle dans la proportion (en parties en poids) de 20:1 à 1:20, de préférence de 10:1 à 1:10.

**11.** Mélanges selon la revendication 10, caractérisés en ce que les terpolymères éthylène/acétate de vinyle/néononanoate de vinyle ou respectivement les terpolymères éthylène/acétate de vinyle/néodécanoate de vinyle contiennent, outre de l'éthylène, 10 à 35 % en poids d'acétate de vinyle et 1 à 25 % en poids de néononanoate de vinyle ou respectivement de néodécanoate de vinyle.

**12.** Mélanges contenant des terpolymères selon la revendication 1 ou 2 et des dispersants des paraffines dans la proportion (en parties en poids) de 1:10 à 20:1, de préférence de 1:1 à 10:1.

**13.** Mélanges contenant des terpolymères selon la revendication 1 ou 2 et des polymères "peignes" dans la proportion (en parties en poids) de 1:10 à 20:1, de préférence de 1:1 à 10:1.

**14.** Huiles minérales ou distillats d'huiles minérales qui contiennent 0,0005 à 1 % en poids, de préférence 0,001 à 0,5 % en poids (par rapport au distillat d'huile minérale) d'un terpolymère selon la revendication 1 ou 2 ou de mélanges selon l'une des revendications 8 à 13.